# EUROPÄISCHE PATENTSCHRIFT

(11) **EP 3 883 671 B1**
(45) Veröffentlichungstag und Bekanntmachung des Hinweises auf die Patenterteilung: **28.12.2022**
(21) Anmeldenummer: 19805140.1
(22) Anmeldetag: 05.11.2019
(51) Int. Cl.: B01D 53/22, B01D 53/32, C01B 32/40, C25B 15/08

(54) **VERFAHREN ZUM WECHSEL DER BETREIBSWEISE EINER ELEKTROLYSEANLAGE SOWIE ELEKTROLYSEANLAGE**
METHOD FOR CHANGING THE OPERATING MODE OF AN ELECTROLYSIS SYSTEM, AND ELECTROLYSIS SYSTEM
PROCÉDÉ DE CHANGEMENT DU MODE DE FONCTIONNEMENT D'UNE INSTALLATION D'ÉLECTROLYSE AINSI QU'INSTALLATION D'ÉLECTROLYSE

(30) Priorität: 22.11.2018 DE 102018009198
(43) Veröffentlichungstag der Anmeldung: 29.09.2021
(73) Patentinhaber: Linde GmbH, 82049 Pullach (DE)
(72) Erfinder: CICHY, Thomas, 69412 Eberbach (DE); PESCHEL, Andreas, 82515 Wolfratshausen (DE); HENTSCHEL, Benjamin, 80689 München (DE)
(74) Vertreter: Fischer, Werner
(86) Internationale Anmeldenummer: PCT/EP2019/025378
(87) Internationale Veröffentlichungsnummer: WO 2020/104053

(56) Entgegenhaltungen:
- EP-A1- 2 832 421
- EP-A1- 2 940 773
- WO-A1-2014/154253
- JP-A- 2018 156 914

## Beschreibung

Die Erfindung betrifft ein Verfahren zum Wechsel der Betriebsweise einer, einen Elektrolyseur, einen Verdichter und eine Membrantrenneinrichtung aufweisenden Vorrichtung zwischen Normal- und Standby-Betrieb, wobei im Normalbetrieb der Vorrichtung ein Kohlendioxid umfassender Elektrolyseeinsatz im Elektrolyseur in ein Kohlendioxid und Kohlenmonoxid enthaltendes Elektrolyseprodukt umgesetzt wird, von dem zumindest ein Teil über den Verdichter geleitet und mit erhöhtem Druck der Membrantrenneinrichtung zugeführt wird, um ein im Vergleich zum Elektrolyseprodukt an Kohlenmonoxid an- und an Kohlendioxid abgereichertes Retentat zu erhalten.

Weiterhin betrifft die Erfindung eine Vorrichtung, die nach dem erfindungsgemäßen Verfahren betrieben werden kann.

Unter einem Retentat versteht der Fachmann diejenigen Bestandteile eines Gasgemisches, die von einer zur Trennung des Gasgemisches eingesetzten Membran zurückgehalten werden. Die im Rahmen der vorliegenden Erfindung verwendete Membrantrenneinrichtung ist mit zumindest einer Membran ausgeführt, die Kohlendioxid bevorzugt passieren lässt und Kohlenmonoxid zurückhält. Hierdurch wird als Retentat ein Gas bzw. Gasgemisch erhalten, das im Vergleich zum eingesetzten Elektrolyseprodukt an Kohlendioxid abgereichert ist.

Entsprechend handelt es sich bei einem Permeat um die Bestandteile des zu trennenden Gasgemischs, die von der zur Trennung eingesetzten Membran nicht zurückgehalten werden. Das im Rahmen der vorliegenden Erfindung betrachtete Permeat ist im Vergleich zum Elektrolyseprodukt an Kohlendioxid an- und an Kohlenmonoxid abgereichert.

Je nach dem Gas bzw. Gasgemisch, das von ihr abziehbar ist, bezeichnet man eine Seite einer zur Trennung eines Gasgemisches einsetzbaren Membran bzw. Membrantrenneinrichtung als Retentat- oder Permeatseite.

Vorrichtungen der gattungsgemäßen Art werden zur Erzeugung von Kohlenmonoxid oder Synthesegas verwendet, wobei Kohlendioxid alleine oder zusammen mit Wasser elektrochemisch im Elektrolyseur zu einem Elektrolyseprodukt umgesetzt wird, das neben Kohlenmonoxid bzw. Kohlenmonoxid und Wasserstoff auch nicht umgesetztes Kohlendioxid enthält, das in einer stromabwärts angeordneten Membrantrenneinrichtung abgetrennt werden muss, um Kohlenmonoxid bzw. Synthesegas zu erhalten. Die Membrantrenneinrichtung weist wenigstens eine selektiv für Kohlendioxid durchlässige Membranen auf, über die ein CO₂-Partialdruckunterschied erzeugt wird. Die Selektivität der verwendeten Membran resultiert aus unterschiedlichen Diffusionsgeschwindigkeiten der Komponenten des zu trennenden Gasgemisches. Entsprechende Polymermembranen werden derzeit kommerziell eingesetzt.

Nachfolgend werden die Prinzipien der im Elektrolyseur ablaufenden Reaktionen am Beispiel der Ko-Elektrolyse von Wasser und Kohlendioxid beschrieben. Anstelle einer Ko-Elektrolyse von Wasser und Kohlendioxid kann im Rahmen der vorliegenden Erfindung jedoch insbesondere auch eine reine Kohlendioxidelektrolyse zum Einsatz kommen. Es versteht sich, dass hier die die Wasserelektrolyse betreffenden Reaktionsgleichungen nicht zutreffen bzw. entsprechende Reaktionen nicht ablaufen. Auf eine separate Erläuterung wird jedoch der Übersichtlichkeit halber verzichtet.

Je nach dem verwendeten Elektrolyten und dem eingesetzten Katalysator, existieren unterschiedliche Ausgestaltungen der Ko-Elektrolyse, die sich insbesondere durch die Betriebstemperatur und die an den Elektroden des Elektrolyseurs ablaufenden elektrochemischen Reaktionen unterscheiden.

Zur Durchführung der sogenannten Niedertemperatur-Ko-Elektrolyse wird ein Elektrolyseur mit einer Protonenaustauschmembran eingesetzt. In diesem Fall laufen die folgenden Kathodenreaktionen ab:

CO₂ + 2 e⁻ + 2 H⁺ → CO + H₂O (1)

2 e⁻ + 2 H⁺ → H₂ (2)

### Gemäß der Gleichung

H₂O → ½ O₂ + 2 H⁺ - 2e⁻ (3)

wird an der Anode Wasser zersetzt.

In Varianten entsprechender Verfahren können an der Anode anstelle von Protonen andere positive Ladungsträger wie die Ionen eines Elektrolytsalzes gebildet, über eine entsprechend ausgestaltete Membran transportiert und an der Kathode umgesetzt werden. Ein Beispiel für ein Elektrolytsalz ist Kaliumhydroxid. In diesem Fall handelt es sich bei den positiven Ladungsträgern um Kaliumionen. Weitere Varianten umfassen beispielsweise die Verwendung von Anionenaustauschmembranen. In sämtlichen Varianten erfolgt jedoch der Transport der Ladungsträger nicht wie in den nachfolgend erläuterten Festoxid-Elektrolysezellen in Form von Sauerstoffionen, sondern in Form der erläuterten Ladungsträger. Zu Details sei beispielsweise auf Delacourt et al. (2008), J. Electrochem. Soc. 155(1), B42-B49, DOI: 10.1149/1.2801871, verwiesen.

Die Protonen oder andere entsprechende Ladungsträger werden über eine Membran selektiv von der Anoden- zur Kathodenseite übertragen. An der Kathode konkurrieren dann, je nach gewähltem Katalysator, die jeweiligen Bildungsreaktionen, so dass sich Synthesegase mit unterschiedlichen Wasserstoff/Kohlenmonoxid-Verhältnissen ergeben. Je nach Ausgestaltung des verwendeten Katalysators können bei der Niedertemperatur-Ko-Elektrolyse auch andere Wertprodukte gebildet werden.

Bei der Hochtemperatur-Ko-Elektrolyse, die unter Verwendung von Festoxid-Elektrolysezellen durchgeführt wird, werden die folgenden Kathodenreaktionen beobachtet bzw. postuliert:

CO₂ + 2 e⁻ → CO + O2⁻ (4)

H₂O + 2 e⁻ → H₂ + O²⁻ (5)

Ferner läuft an der Anode die folgende Reaktion ab:

2 O²⁻ → O₂ + 4 e⁻ (6)

Die Sauerstoffionen werden hierbei im Wesentlichen selektiv über eine keramische Membran von der Kathode zur Anode geleitet.

Es ist nicht vollständig geklärt, ob die Reaktion gemäß Reaktionsgleichung 4 in der dargestellten Weise abläuft. Möglicherweise wird lediglich Wasserstoff elektrochemisch gebildet, während Kohlenmonoxid durch umgekehrte Wassergas-Shiftreaktion in Anwesenheit von Kohlendioxid entsteht:

CO₂ + H₂ ⇄ H₂O + CO (7)

In der Regel befindet sich das bei der Hochtemperatur-Ko-Elektrolyse erhaltene Gasgemisch im Wassergas-Shift-Gleichgewicht (oder ist diesem angenähert). Auf die vorliegende Erfindung hat die konkrete Art und Weise der Bildung des Kohlenmonoxids jedoch keinen Einfluss.

Weder bei der Hoch- noch bei der Niedertemperatur-Ko-Elektrolyse erfolgt i.d.R. ein vollständiger Umsatz von Kohlendioxid und Wasser, weshalb das an der Kathode abgezogenen Elektrolyseprodukt Kohlendioxid enthält.

Wegen der vergleichsweise niedrigen Investitionskosten sind die beschriebenen Elektrolyseverfahren mit nachgeschalteter membranbasierter Kohlendioxidabtrennung insbesondere dann vorteilhaft einsetzbar, wenn kleine oder mittlere Mengen von Kohlenmonoxid bzw. Synthesegas für einen Verbraucher vor Ort produziert werden sollen. Oft werden gerade bei derartigen Einsatzfällen aber hohe Anforderungen an die Flexibilität der Anlage gestellt, weil entweder die abgebbaren Produktmengen zeitlich stark schwanken, wie etwa dann, wenn der Verbraucher in einem Batchprozess betrieben wird, oder wenn die Preisvorteile am schwankenden Elektrizitätsmarkt optimal genutzt werden sollen. Zwar sind besonders Niedertemperatur-Elektrolysen für einen flexiblen Einsatz geeignet, weil ihre Betriebsweise sehr schnell zwischen Normal- und Standby-Betrieb gewechselt werden kann. Da der Differenzdruck über die Membranen zur Vermeidung von Schäden aber sehr viel langsamer eingestellt werden muss, sind die bekannten Konzepte zur elektrolytischen Kohlenmonoxid- bzw. Synthesegasgewinnung jedoch durch die langen Ab- und Anfahrzeiten der für die Kohlendioxidabtrennungen eingesetzten Membrantrenneinrichtungen gekennzeichnet, die die Flexibilität des Gesamtprozesses stark einschränken. Wenn kurzfristig kein Kohlenmonoxid bzw. Synthesegas an den Verbraucher abgegeben werden kann, wird daher nach dem Stand der Technik der Normalbetrieb aufrechterhalten und die nicht abgebbare Produktmenge unter wirtschaftlichen Einbußen verworfen.

Beispiele für den oben beschriebenen Stand der Technik findet man in WO2014/154253, EP2832421, EP2940773 oder JP2018156914.

Aufgabe der vorliegenden Erfindung ist es daher, ein Verfahren sowie eine Vorrichtung der eingangs beschriebenen Art anzugeben, die geeignet sind, die Menge des an Kohlendioxid abgereicherten Retentats wirtschaftlicher als im Stand der Technik mit hoher Flexibilität zu erzeugen.

Die gestellte Aufgabe wird verfahrensseitig erfindungsgemäß dadurch gelöst, dass zum Wechsel aus dem Normal- in den Standby-Betrieb der Elektrolyseur strömungstechnisch von der Membrantrenneinrichtung vollständig isoliert und anschließend heruntergefahren wird, wobei die Druckverhältnisse in der Membrantrenneinrichtung weitgehend aufrechterhalten werden.

Dass die Druckverhältnisse in der Membrantrenneinrichtung weitgehend aufrechterhalten werden, ist so zu verstehen, dass sich der Differenzdruck über jede Membran der Membrantrenneinrichtung bei gleichbleibendem Vorzeichen nur langsam ändert und dabei bevorzugt um nicht mehr als 30 und besonders bevorzugt nicht mehr als 15% von dem Mittelwert abweicht, den der Differenzdruck während des Normalbetriebs besitzt. Als langsam gilt eine Differenzdruckänderung, wenn sie bezogen auf den Mittelwert, den der Differenzdruck während des Normalbetriebs besitzt, mit einer Geschwindigkeit von weniger als 30 und bevorzugt weniger als 15%/min. erfolgt. Sinnvollerweise werden die Druckverhältnisse in der Membrantrenneinrichtung nicht nur beim Wechsel vom Normal- in den Standby-Betrieb, sondern auch während des Standby-Betriebs selbst weitgehend aufrechterhalten.

Vollständig strömungstechnisch isoliert wird der Elektrolyseur von der Membrantrenneinrichtung durch das Absperren sämtlicher Leitungen, die den Elektrolyseur direkt oder über ein oder mehrere weitere Teile der Vorrichtung mit der Membrantrenneinrichtung verbinden. Da die Membrantrenneinrichtung anschließend nicht länger mit frischem Elektrolyseprodukt versorgt werden kann, würde die strömungstechnische Isolierung zu einer Veränderung der Druckverhältnisse in der Membrantrenneinrichtung führen. Vorzugsweise wird die Membraneinrichtung daher gleichzeitig mit ihrer vollständigen strömungstechnischen Isolierung vom Elektrolyseur mit dem Verdichter zu einem nach außen abgeschlossenen System verschaltet, in dem die Saugseite des Verdichters über eine erste Leitung mit der Permeatseite der Membrantrenneinrichtung verbunden ist. Zur weitgehenden Aufrechterhaltung der Druckverhältnisse in der Membrantrenneinrichtung kann die Druckseite des Verdichters oder die Retentatseite der Membrantrenneinrichtung mit der Saugseite des Verdichters über eine zweite Leitung verbunden werden, in der ein mit einem Druckregler gekoppeltes Regelventil angeordnet ist.

Um aus dem erfindungsgemäßen Standby-Betrieb in den Normalbetrieb zu wechseln, ist vorgesehen, den Elektrolyseur zunächst hochzufahren und anschließend seine strömungstechnische Isolierung von der Membrantrenneinrichtung unter weitgehender Aufrechterhaltung der Druckverhältnisse in der Membrantrenneinrichtung vollständig aufzuheben.

Falls die Membrantrenneinrichtung im Standby-Betrieb mit dem Verdichter zu einem nach außen abgeschlossenen System verschaltet ist, wird dieses System zum Wechsel aus dem Standby- in den Normalbetrieb zweckmäßigerweise mit dem bereits hochgefahrenen Elektrolyseur verbunden, wobei gleichzeitig der Weg für das Retentat stromabwärts der Membrantrenneinrichtung geöffnet und die Verbindung der Saugseite des Verdichters mit der Permeatseite der Membrantrenneinrichtung unterbrochen wird. Die zwischen der Saugseite des Verdichters und seiner Druckseite bzw. der Retentatseite der Membrantrenneinrichtung bestehende Verbindung kann zur Kontrolle der Druckverhältnisse in der Membrantrenneinrichtung auch im Normalbetrieb bestehen bleiben.

Weist die erfindungsgemäße Vorrichtung eine stromaufwärts des Elektrolyseurs angeordnete Mischeinrichtung auf, mit der aus einem Kohlendioxid enthaltenden Einsatz sowie zumindest einem Teil des in der Membrantrenneinrichtung anfallenden Permeats der Elektrolyseeinsatz gebildet wird, wird sinnvollerweise die über die Mischeinrichtung bestehende strömungstechnische Verbindung zwischen dem Elektrolyseur und der Membrantrenneinrichtung beim Wechsel vom Normal- in den Standby-Betrieb der Vorrichtung unterbrochen und beim Wechsel von Standby-in den Normalbetrieb geöffnet.

Weiterhin betrifft die Erfindung eine Vorrichtung mit einem Verdichter, einer Membrantrenneinrichtung sowie einem Elektrolyseur, mit dem im Normalbetrieb der Vorrichtung ein Kohlendioxid umfassender Elektrolyseeinsatz in ein Kohlendioxid und Kohlenmonoxid enthaltendes Elektrolyseprodukt umgesetzt werden kann, von dem zumindest ein Teil über den Verdichter leit- und mit erhöhtem Druck der Membrantrenneinrichtung zuführbar ist, um ein im Vergleich zum Elektrolyseprodukt an Kohlenmonoxid an- und an Kohlendioxid abgereichertes Retentat zu erhalten.

Die gestellte Aufgabe wird vorrichtungsseitig erfindungsgemäß dadurch gelöst, dass die Vorrichtung eine Isoliereinrichtung mit zumindest einem Ventil aufweist, mit der beim Wechsel aus dem Normal- in den Standby-Betrieb der Elektrolyseur unter weitgehender Aufrechterhaltung der Druckverhältnisse in der Membrantrenneinrichtung von der Membrantrenneinrichtung strömungstechnisch vollständig isoliert werden kann.

Ein bevorzugte Ausgestaltung der erfindungsgemäßen Vorrichtung sieht vor, dass die Isoliereinrichtung mehrere Ventile sowie eine erste und eine zweite Leitung zur Verschaltung der Membrantrenneinrichtung mit dem Verdichter zu einem nach außen abgeschlossenen System umfasst, in dem die Saugseite des Verdichters über die erste Leitung mit der Permeatseite der Membrantrenneinrichtung und über die zweite Leitung mit der Druckseite des Verdichters bzw. der Retentatseite der Membrantrenneinrichtung verbunden ist, wobei in der zweiten Leitung ein Regelorgan angeordnet ist, über das der Differenzdruck zwischen Retentat- und Permeatseite der Membrantrenneinrichtung bei einem Wechsel zwischen Normal- und Standby-Betrieb kontrolliert werden kann.

Eine weitere bevorzugte Ausgestaltung der erfindungsgemäßen Vorrichtung sieht eine stromaufwärts des Elektrolyseurs angeordnete, strömungstechnisch mit der Permeatseite der Membrantrenneinrichtung verbundene Mischeinrichtung vor, in der ein Kohlendioxid enthaltender Einsatz mit zumindest einem Teil des in Membrantrenneinrichtung anfallenden Permeats zum Elektrolyseeinsatz gemischt werden kann. Sinnvollerweise ist in der zwischen der Permeatseite der Membrantrenneinrichtung und der Mischeirichtung bestehenden strömungstechnischen Verbindung ein zur Isoliereinrichtung gehörendes Ventil angeordnet, das während des Normalbetriebs der Vorrichtung offen und im Standby-Betrieb geschlossen ist. Erfindungsgemäß handelt es sich bei dem Elektrolyseur der Vorrichtung um einen Hoch- oder einen Niedertemperatur-Elektrolyseur, der dazu ausgelegt ist, Kohlendioxid alleine oder gemeinsam mit Wasser elektrochemisch zu Wasserstoff und/oder Kohlenmonoxid umzusetzen.

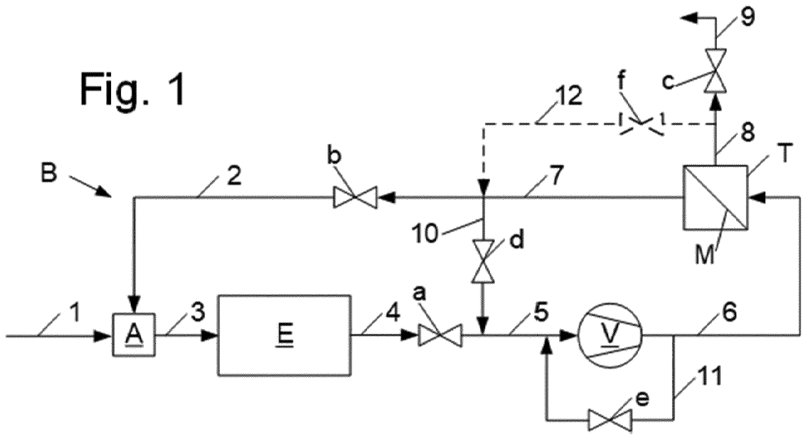

Im Folgenden soll die Erfindung anhand einer in der **Figur 1** schematisch dargestellten Ausführungsbeispiels näher erläutert werden.

Die Figur 1 zeigt zwei bevorzugte Ausgestaltungen der erfindungsgemäßen Vorrichtung, in denen die Membrantrenneinrichtung und der Verdichter beim Wechsel zwischen Normal- und Standby-Betrieb auf eine erste oder eine zweite Art miteinander verschaltet werden können.

In der Vorrichtung B wird im Normalbetrieb ein Kohlendioxid enthaltender Einsatz 1 in die Mischeinrichtung A eingeleitet und dort mit dem weitgehend aus Kohlendioxid bestehenden Recyclestrom 2 zum Elektrolyseeinsatz 3 gemischt, der anschließend dem Elektrolyseur E zugeführt wird. Hier wird das im Elektrolyseeinsatz 3 enthaltene Kohlendioxid alleine oder gemeinsam mit Wasser durch Hoch- oder Niedertemperatur-Elektrolyse umgesetzt, so dass ein Elektrolyseprodukt 4 von der Kathode des Elektrolyseurs E abgezogen werden kann, das aus Kohlendioxid und evtl. Wasserstoff sowie nicht umgesetztem Kohlendioxid besteht. Über das Ventil a und die Leitung 5 wird das Elektrolyseprodukt dem Verdichter V zugeführt, aus dem es mit erhöhtem Druck über Leitung 6 in die Membrantrenneinrichtung T eingeleitet wird. Die Membrantrenneinrichtung T ist zwar mit einer einzigen Membran M dargestellt, sie kann jedoch auch mehrere seriell oder parallel angeordnete, selektiv für Kohlendioxid durchlässige Membranen aufweisen. Zwischen der Retentat- und der Permeatseite jeder Membran besteht eine Druckdifferenz, aufgrund dessen Kohlendioxid aus den Elektrolyseprodukt abgetrennt wird, so dass ein weitgehend aus Kohlendioxid bestehendes Permeat 7 und ein gegenüber dem Elektrolyseprodukt im Kohlendioxidgehalt abgereichertes Retentat 8 erhalten werden. Das Permeat 7 wird über das Ventil b als Recyclestrom 2 in die Mischeinrichtung A eingeleitet, während das Permeat 7 über das Ventil c als Produkt 9 an einen Verbraucher (nicht dargestellt) abgegeben wird. Das Ventil d ist während des Normalbetriebs geschlossen, so dass die Leitung 10 nicht durchströmt wird. Zur Regelung der Druckverhältnisse in der Membrantrenneinrichtung T enthält die Leitung 11 (erste bevorzugte Ausgestaltung) bzw. 12 (erste bevorzugte Ausgestaltung) ein Regelventil e bzw. f, das mit einem Druckregler gekoppelt ist.

Um die Vorrichtung vom Normal- in den Standby-Betrieb umzuschalten, werden bei laufendem Verdichter V und unter weitgehender Aufrechterhaltung des Differenzdrucks über die Membran M bzw. die Membranen M der Membrantrenneinrichtung T die Ventile a, b und c geschlossen. Gleichzeitig wird das Ventil d geöffnet, so dass die Permeatseite der Membrantrenneinrichtung T über die Leitung 10 mit der Saugseite des Verdichters V verbunden ist. Die Membrantrenneinrichtung T ist nun mit dem Verdichter V zu einem nach außen abgeschlossenen System verschaltet und vom Elektrolyseurs E strömungstechnisch vollständig isoliert, der daher abgeschaltet werden kann. Die Druckverhältnisse in der Membrantrenneinrichtung T werden während des Umschaltens und für die Dauer des Standby-Betriebs über das Regelventil e bzw. f kontrolliert.

Soll vom Standby- wieder in den Normalbetrieb gewechselt werden, werden die Ventile a, b und c geöffnet und das Ventil d geschlossen, während die Druckverhältnisse in der Membrantrenneinrichtung T über das Regelventil e bzw. f weitgehend aufrechterhalten werden. Gleichzeitig wird der Elektrolyseur E wieder angefahren. Ggf. wird der Retentatstrom 8 so lange verworfen oder zum Elektrolyseur E zurückgeführt, bis die geforderte Produktreinheit erreicht ist.

## Patentansprüche

1. Verfahren zum Wechsel der Betriebsweise einer, einen Elektrolyseur (E), einen Verdichter (V) und eine Membrantrenneinrichtung (T) aufweisenden Vorrichtung (B) zwischen Normal- und Standby-Betrieb, wobei im Normalbetrieb der Vorrichtung (B) ein Kohlendioxid umfassender Elektrolyseeinsatz (3) im Elektrolyseur (E) in ein Kohlendioxid und Kohlenmonoxid enthaltendes Elektrolyseprodukt (4) umgesetzt wird, von dem zumindest ein Teil (5) über den Verdichter (V) geleitet und mit erhöhtem Druck der Membrantrenneinrichtung (T) zugeführt wird, um ein im Vergleich zum Elektrolyseprodukt (4) an Kohlenmonoxid an- und an Kohlendioxid abgereichertes Retentat (8) zu erhalten, **dadurch gekennzeichnet, dass** zum Wechsel aus dem Normal- in den Standby-Betrieb der Elektrolyseur (E) strömungstechnisch von der Membrantrenneirichtung (T) vollständig isoliert und anschließend heruntergefahren wird, wobei die Druckverhältnisse in der Membrantrenneinrichtung (T) weitgehend aufrechterhalten werden.

2. Verfahren nach Anspruch 1, **dadurch gekennzeichnet, dass** zur Aufrechterhaltung der Druckverhältnisse in der Membrantrenneinrichtung (T) der Verdichter (V) mit der Membrantrenneinrichtung (T) zu einem strömungstechnisch nach außen abgeschlossenen System verschaltet wird, in dem die Saugseite des Verdichters (V) über eine erste Leitung (10) mit der Permeatseite der Membrantrenneinrichtung (T) und über eine zweite Leitung (11) mit der Druckseite des Verdichters (V) oder der Retentatseite der Membrantrenneinrichtung (T) verbunden ist, wobei der Differenzdruck zwischen Retentat- und Permeatseite über ein in der zweiten Leitung angeordnetes Regelventil (e) kontrolliert wird.

3. Verfahren nach einem der Ansprüche 1 oder 2, **dadurch gekennzeichnet, dass** zum Wechsel aus dem Standby- in den Normalbetrieb der Elektrolyseur (E) hochgefahren und anschließend seine strömungstechnische Isolierung von der Membrantrenneinrichtung (T) unter weitgehender Aufrechterhaltung der Druckverhältnisse in der Membrantrenneinrichtung (T) vollständig aufgehoben wird.

4. Verfahren nach Anspruch 2, **dadurch gekennzeichnet, dass** zum Wechsel aus dem Standby- in den Normalbetrieb das strömungstechnisch nach außen abgeschlossene, den Verdichter (V) und die Membrantrenneinrichtung (T) umfassende System mit dem bereits hochgefahrenen Elektrolyseur (E) verbunden wird, wobei gleichzeitig der Weg (9) für das Retentat stromabwärts der Membrantrenneinrichtung (T) geöffnet wird und die direkten Verbindungen der Saugseite des Verdichters (V) mit und der Permeatseite der Membrantrenneinrichtung (T) und der Druckseite des Verdichters (V) bzw. der Retentatseite der Membrantrenneinrichtung (T) unterbrochen werden.

5. Vorrichtung (B) mit einem Verdichter (V), einer Membrantrenneinrichtung (T) sowie einem Elektrolyseur (E), mit dem im Normalbetrieb der Vorrichtung (B) ein Kohlendioxid umfassender Elektrolyseeinsatz (3) in ein Kohlendioxid und Kohlenmonoxid enthaltendes Elektrolyseprodukt (4) umgesetzt werden kann, von dem zumindest ein Teil (5) über den Verdichter (V) leit- und mit erhöhtem Druck der Membrantrenneinrichtung (T) zuführbar ist, um ein im Vergleich zum Elektrolyseprodukt an Kohlenmonoxid an- und an Kohlendioxid abgereichertes Retentat zu erhalten, **dadurch gekennzeichnet, dass** die Vorrichtung (B) eine Isoliereinrichtung mit zumindest einem Ventil (a) aufweist, mit der beim Wechsel aus dem Normal- in den Standby-Betrieb der Elektrolyseur (E) unter weitgehender Aufrechterhaltung der Druckverhältnisse in der Membrantrenneinrichtung von der Membrantrenneinrichtung (T) strömungstechnisch vollständig isoliert werden kann.

6. Vorrichtung nach Anspruch 5, **dadurch gekennzeichnet, dass** die Isoliereinrichtung mehrere Ventile (a, b, c,) sowie eine erste (10) und eine zweite Leitung (11, 12) zur Verschaltung der Membrantrenneinrichtung (T) mit dem Verdichter (V) zu einem nach außen abgeschlossenen System umfasst, in dem die Saugseite des Verdichters (V) über die erste Leitung (10) mit der Permeatseite der Membrantrenneinrichtung (T) und über die zweite Leitung (11, 12) mit der Druckseite des Verdichters (V) bzw. der Retentatseite der Membrantrenneinrichtung (T) verbunden ist, wobei in der zweiten Leitung (11, 12) ein Regelorgan (e, f) angeordnet ist, über das der Differenzdruck zwischen Retentat- und Permeatseite der Membrantrenneinrichtung (T) bei einem Wechsel der Betriebsweise kontrolliert werden kann.

7. Vorrichtung nach einem der Ansprüche 5 oder 6, **dadurch gekennzeichnet, dass** sie eine stromaufwärts des Elektrolyseurs (E) angeordnete, mit der Permeatseite der Membrantrenneinrichtung (T) strömungstechnisch verbundene Mischeinrichtung (A) aufweist, in der ein Kohlendioxid enthaltender Einsatz (1) mit zumindest einem Teil des in Membrantrenneinrichtung (T) anfallenden Permeats zum Elektrolyseeinsatz (3) gemischt werden kann, wobei die zwischen der Permeatseite der Membrantrenneinrichtung (T) und der Mischeirichtung (A) bestehende strömungstechnische Verbindung ein zur Isoliereinrichtung gehörendes Ventil (c) umfasst, das während des Normalbetriebs der Vorrichtung offen und im Standby-Betrieb geschlossen ist.

8. Vorrichtung nach einem der Ansprüche 5 bis 7, **dadurch gekennzeichnet, dass** es sich bei dem Elektrolyseur (E) um einen Hoch- oder einen Niedertemperatur-Elektrolyseur handelt, der dazu ausgelegt ist, Kohlendioxid alleine oder gemeinsam mit Wasser elektrochemisch zu Wasserstoff und/oder Kohlenmonoxid umzusetzen.

## Claims

1. Method for changing the operating mode of an apparatus (B) comprising an electrolyzer (E), a compressor (V) and a membrane separation device (T), between normal operation and standby operation, wherein, in normal operation of the apparatus (B), an electrolysis feedstock (3) comprising carbon dioxide is converted in the electrolyzer (E) into an electrolysis product (4) containing carbon dioxide and carbon monoxide, at least a portion (5) of which product is conducted via the compressor (V) and is fed to the membrane separation device (T) at an elevated pressure in order to obtain a retentate (8) which is enriched in carbon monoxide and depleted of carbon dioxide compared to the electrolysis product (4),**characterized in that,** in order to change from normal operation into standby operation, the electrolyzer (E) is completely fluidically isolated from the membrane separation device (T) and subsequently shut down, wherein the pressure conditions in the membrane separation device (T) are largely maintained.

2. Method according to claim 1, **characterized in that,** in order to maintain the pressure conditions in the membrane separation device (T), the compressor (V) is connected to the membrane separation device (T) to form a system which is fluidically closed to the outside, in which system the suction side of the compressor (V) is connected via a first line (10) to the permeate side of the membrane separation device (T) and via a second line (11) to the pressure side of the compressor (V) or the retentate side of the membrane separation device (T), wherein the differential pressure between the retentate side and the permeate side is controlled via a control valve (e) arranged in the second line.

3. Method according to either claim 1 or claim 2, **characterized in that,** in order to change from standby operation into normal operation, the electrolyzer (E) is started up and its fluidic isolation from the membrane separation device (T) is then completely removed while largely maintaining the pressure conditions in the membrane separation device (T).

4. Method according to claim 2, **characterized in that,** in order to change from standby operation into normal operation, the system, which is fluidically closed to the outside and comprises the compressor (V) and the membrane separation device (T), is connected to the electrolyzer (E), which has already been started up, wherein, at the same time, the path (9) for the retentate is opened downstream of the membrane separation device (T) and the direct connections of the suction side of the compressor (V) with and the permeate side of the membrane separation device (T) and the pressure side of the compressor (V) or the retentate side of the membrane separation device (T) are interrupted.

5. Apparatus (B) comprising a compressor (V), a membrane separation device (T) and an electrolyzer (E), by means of which, in normal operation of the apparatus (B), an electrolysis feedstock (3) comprising carbon dioxide can be converted into an electrolysis product (4) containing carbon dioxide and carbon monoxide, at least a portion (5) of which product can be conducted via the compressor (V) and can be fed to the membrane separation device (T) at an elevated pressure in order to obtain a retentate which is enriched in carbon monoxide and depleted of carbon dioxide compared to the electrolysis product,**characterized in that** the apparatus (B) has an isolation device having at least one valve (a), by means of which, when changing from normal operation into standby operation, the electrolyzer (E) can be completely fluidically isolated from the membrane separation device (T) while largely maintaining the pressure conditions in the membrane separation device.

6. Apparatus according to claim 5, **characterized in that** the isolation device comprises a plurality of valves (a, b, c) and a first line (10) and a second line (11, 12) for connecting the membrane separation device (T) to the compressor (V) to form a system which is closed to the outside, in which system the suction side of the compressor (V) is connected via the first line (10) to the permeate side of the membrane separation device (T) and via the second line (11, 12) to the pressure side of the compressor (V) or the retentate side of the membrane separation device (T), wherein a control element (e, f) is arranged in the second line (11, 12), by means of which the differential pressure between the retentate side and the permeate side of the membrane separation device (T) can be controlled when the operating mode is changed.

7. Apparatus according to either claim 5 or claim 6, **characterized in that** it has a mixing device (A) which is arranged upstream of the electrolyzer (E) and is fluidically connected to the permeate side of the membrane separation device (T), and in which a feedstock (1) containing carbon dioxide can be mixed with at least a portion of the permeate obtained in the membrane separation device (T) to form the electrolysis feedstock (3), wherein the fluidic connection existing between the permeate side of the membrane separation device (T) and the mixing device (A) comprises a valve (c) which belongs to the isolation device and which is open during normal operation of the apparatus and closed in standby operation.

8. Apparatus according to any of claims 5 to 7, **characterized in that** the electrolyzer (E) is a high-temperature electrolyzer or a low-temperature electrolyzer which is designed to electrochemically convert carbon dioxide, alone or together with water, into hydrogen and/or carbon monoxide.

## Revendications

1. Procédé permettant de changer le mode de fonctionnement d'un dispositif (B) présentant un électrolyseur (E), un compresseur (V) et un appareil de séparation à membrane (T) entre un fonctionnement normal et un fonctionnement en veille, dans le fonctionnement normal du dispositif (B), une charge d'électrolyse (3) comprenant du dioxyde de carbone étant convertie dans l'électrolyseur (E) en un produit d'électrolyse (4) contenant du dioxyde de carbone et du monoxyde de carbone dont au moins une partie (5) est conduite par l'intermédiaire du compresseur (V) et est acheminée avec une pression accrue à l'appareil de séparation à membrane (T) pour obtenir un rétentat (8) enrichi en monoxyde de carbone et appauvri en dioxyde de carbone par rapport au produit d'électrolyse (4), **caractérisé en ce que,** pour le changement du fonctionnement normal au fonctionnement en veille, l'électrolyseur (E) est complètement isolé de l'appareil de séparation à membrane (T) par communication fluidique et est ensuite arrêté, les rapports de pression dans l'appareil de séparation à membrane (T) étant largement maintenus.

2. Procédé selon la revendication 1, **caractérisé en ce que,** pour le maintien des rapports de pression dans l'appareil de séparation à membrane (T), le compresseur (V) est connecté à l'appareil de séparation à membrane (T) pour former un système fermé vers l'extérieur par communication fluidique, dans lequel système le côté aspiration du compresseur (V) est relié au côté perméat de l'appareil de séparation à membrane (T) par l'intermédiaire d'une première conduite (10) et est relié au côté pression du compresseur (V) ou au côté rétentat de l'appareil de séparation à membrane (T) par l'intermédiaire d'une seconde conduite (11), la pression différentielle entre le côté rétentat et le côté perméat étant contrôlée par l'intermédiaire d'une soupape de régulation (e) disposée dans la seconde conduite.

3. Procédé selon l'une des revendications 1 ou 2, **caractérisé en ce que,** pour le changement du fonctionnement en veille au fonctionnement normal, l'électrolyseur (E) est mis en marche, puis son isolation par communication fluidique par rapport à l'appareil de séparation à membrane (T) est complètement arrêtée en maintenant largement les rapports de pression dans l'appareil de séparation à membrane (T).

4. Procédé selon la revendication 2, **caractérisé en ce que,** pour le changement du fonctionnement en veille au fonctionnement normal, le système fermé vers l'extérieur par communication fluidique et comprenant le compresseur (V) et l'appareil de séparation à membrane (T) est relié à l'électrolyseur (E) déjà mis en marche, le chemin (9) pour le rétentat étant simultanément ouvert en aval de l'appareil de séparation à membrane (T) et les liaisons directes du côté aspiration du compresseur (V) avec et le côté perméat de l'appareil de séparation à membrane (T) et le côté pression du compresseur (V) ou le côté rétentat de l'appareil de séparation à membrane (T) étant interrompues.

5. Dispositif (B) comportant un compresseur (V), un appareil de séparation à membrane (T) et un électrolyseur (E), avec lequel, lors du fonctionnement normal du dispositif (B), une charge d'électrolyse (3) comprenant du dioxyde de carbone peut être convertie en un produit d'électrolyse (4) contenant du dioxyde de carbone et du monoxyde de carbone dont au moins une partie (5) peut être conduite par l'intermédiaire du compresseur (V) et acheminée avec une pression accrue à l'appareil de séparation à membrane (T) afin d'obtenir un rétentat enrichi en monoxyde de carbone et appauvri en dioxyde de carbone par rapport au produit d'électrolyse, **caractérisé en ce que** le dispositif (B) présente un appareil d'isolation comportant au moins une soupape (a) avec lequel, lors du changement du fonctionnement normal au fonctionnement en veille, l'électrolyseur (E) peut être complètement isolé de l'appareil de séparation à membrane (T) par communication fluidique en maintenant largement les rapports de pression dans l'appareil de séparation à membrane.

6. Dispositif selon la revendication 5, **caractérisé en ce que** l'appareil d'isolation comprend plusieurs soupapes (a, b, c) ainsi qu'une première (10) et une seconde conduite (11, 12) pour la connexion de l'appareil de séparation à membrane (T) au compresseur (V) pour former un système fermé vers l'extérieur, dans lequel le côté aspiration du compresseur (V) est relié au côté perméat de l'appareil de séparation à membrane (T) par l'intermédiaire de la première conduite (10) et est relié au côté pression du compresseur (V) ou au côté rétentat de l'appareil de séparation à membrane (T) par l'intermédiaire de la seconde conduite (11, 12), un organe de régulation (e, f), par l'intermédiaire duquel la pression différentielle entre le côté rétentat et le côté perméat de l'appareil de séparation à membrane (T) peut être contrôlée lors d'un changement du mode de fonctionnement, étant disposé dans la seconde conduite (11, 12).

7. Dispositif selon l'une des revendications 5 ou 6, **caractérisé en ce qu'il** présente un appareil de mélange (A) disposé en amont de l'électrolyseur (E) et relié par communication fluidique au côté perméat de l'appareil de séparation à membrane (T), dans lequel appareil de mélange une charge (1) contenant du dioxyde de carbone peut être mélangée avec au moins une partie du perméat produit dans l'appareil de séparation à membrane (T) pour former une charge d'électrolyse (3), la liaison par communication fluidique existant entre le côté perméat de l'appareil de séparation à membrane (T) et l'appareil de mélange (A) comprenant une soupape (c) appartenant à l'appareil d'isolation, laquelle est ouverte pendant le fonctionnement normal du dispositif et est fermée dans le fonctionnement en veille.

8. Dispositif selon l'une des revendications 5 à 7, **caractérisé en ce que** l'électrolyseur (E) est un électrolyseur à haute température ou à basse température conçu pour convertir du dioxyde de carbone, seul ou avec de l'eau, en hydrogène et/ou en monoxyde de carbone par voie électrochimique.
